# EUROPEAN PATENT SPECIFICATION

(11) **EP 4 310 312 B1**
(45) Date of publication and mention of the grant of the patent: **28.10.2026**
(21) Application number: 23187106.2
(22) Date of filing: 21.07.2023
(51) Int. Cl.: F02K 1/00, F01D 17/16, F02K 1/40, F02K 3/075

(54) **MULTI-DUCT EXHAUST SYSTEM FOR GAS TURBINE ENGINE**
MEHRKANALIGE ABGASANLAGE FÜR GASTURBINENMOTOR
SYSTÈME D'ÉCHAPPEMENT À PLUSIEURS CONDUITS POUR MOTEUR À TURBINE À GAZ

(30) Priority: 22.07.2022 US 202263391496 P; 30.12.2022 US 202218091848
(43) Date of publication of application: 24.01.2024
(73) Proprietor: RTX Corporation, Farmington, CT 06032 (US)
(72) Inventor: BURD, Steven W., Cheshire, 06410 (US)
(74) Representative: Dehns

(56) References cited:
- US-A- 3 366 350
- US-A- 3 635 029
- US-A- 3 747 855
- US-A1- 2002 189 230
- US-A1- 2013 025 259

## Description

### BACKGROUND OF THE DISCLOSURE

### 1. Technical Field

This disclosure relates generally to an aircraft and, more particularly, to an exhaust system for a gas turbine engine.

### 2. Background Information

Various types and configurations of gas turbine engine exhaust systems are known in the art for an aircraft. While these known exhaust systems have various benefits, there is still room in the art for improvement.

US 3 366 350 A discloses a prior art system as set forth in the preamble of claim 1.

US 2002/189230 A1 discloses a prior art variable cycle propulsion system with gas tapping for a supersonic airplane, and a method of operation of the same.

US 3 747 855 A discloses prior art propulsion nozzles.

US 2013/025259 A1 discloses a prior art ducted fan gas turbine assembly.

US 3 635 029 A discloses a prior art composite gas turbine ramjet engine.

### SUMMARY OF THE DISCLOSURE

According to an aspect of the present disclosure, there is provided a system as recited in claim 1.

Features of embodiments are set forth in the dependent claims.

The foregoing features and the operation of the invention will become more apparent in light of the following description and the accompanying drawings.

### BRIEF DESCRIPTION OF THE DRAWINGS

FIG. 1 is a side sectional schematic illustration of an aircraft system with a gas turbine engine and an exhaust system.
FIG. 2A is a partial side sectional schematic illustration of the aircraft system with a bypass flow regulator in a closed position.
FIG. 2B is a partial side sectional schematic illustration of the aircraft system with the bypass flow regulator in an open position.
FIG. 3A is a partial cross-sectional schematic illustration of the aircraft system with an exhaust flow regulator in an open position.
FIG. 3B is a partial cross-sectional schematic illustration of the aircraft system with the exhaust flow regulator in a closed position.
FIG. 4 is a partial side sectional schematic illustration of the aircraft system with a forward facing nozzle bypass duct.
FIG. 5 is a partial side sectional schematic illustration of the aircraft system with an outward facing nozzle bypass duct.
FIG. 6A is a partial side sectional schematic illustration of the aircraft system with another exhaust flow regulator arrangement in an open position.
FIG. 6B is a partial side sectional schematic illustration of the aircraft system with the exhaust flow regulator arrangement of FIG. 6A in a closed position.
FIG. 7A is a partial side sectional schematic illustration of the aircraft system with still another exhaust flow regulator arrangement in an open position.
FIG. 7B is a partial side sectional schematic illustration of the aircraft system with the exhaust flow regulator arrangement of FIG. 7A in a closed position.
FIG. 8A is an illustration of a solid regulator door.
FIG. 8B is an illustration of a perforated regulator door.
FIG. 9 is a cross-sectional schematic illustration of the exhaust duct with another exhaust flow regulator arrangement.
FIG. 10A is a partial cross-sectional schematic illustration of the nozzle bypass duct projecting out from a flat portion of the exhaust duct.
FIG. 11 is a partial schematic illustration of the exhaust system with multiple nozzle bypass ducts.

### DETAILED DESCRIPTION

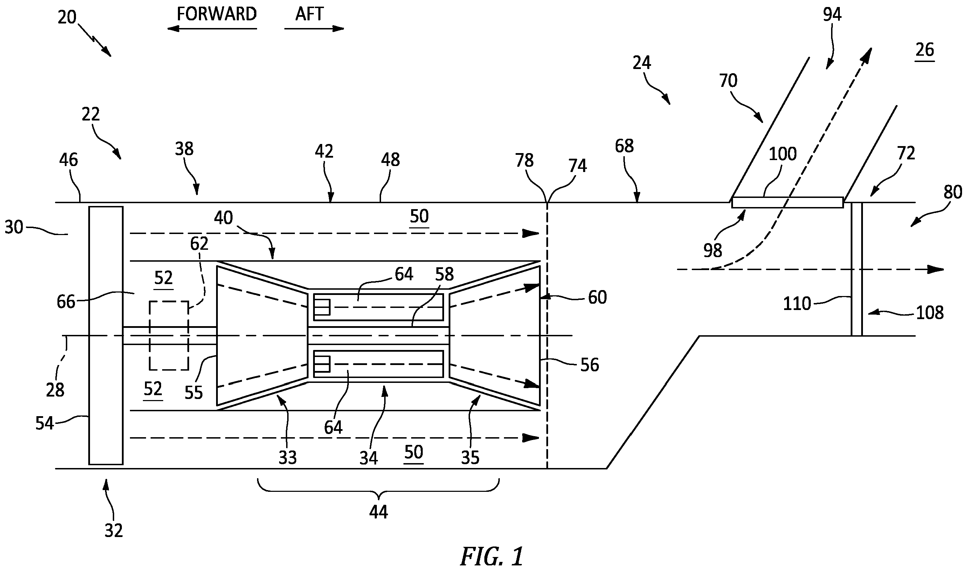

FIG. 1 illustrates a system 20 for an aircraft. This aircraft may be an airplane, a helicopter, a drone (e.g., an unmanned aerial vehicle (UAV)), a spacecraft or any other manned or unmanned aerial vehicle. The aircraft system 20 of FIG. 1 includes a gas turbine engine 22 and an engine exhaust system 24 for exhausting a fluid flow (e.g., a gas flow) received from the gas turbine engine 22 into an exterior environment 26; e.g., an environment outside of / surrounding the aircraft.

The gas turbine engine 22 of FIG. 1 extends axially along an axial centerline 28 between an upstream airflow inlet 30 and the downstream exhaust system 24. The gas turbine engine 22 includes a propulsor section 32, a compressor section 33, a combustor section 34 and a turbine section 35. The propulsor section 32 may be configured as a fan section where, for example, the gas turbine engine 22 is a turbofan gas turbine engine. The propulsor section 32 may alternatively be configured as another (e.g., low pressure) compressor section where, for example, the gas turbine engine 22 is a turbojet gas turbine engine. The propulsor section 32 may include one or more stages or rotating and/or static parts.

The propulsor section 32, the compressor section 33, the combustor section 34 and the turbine section 35 may be arranged sequentially along the axial centerline 28 within an engine housing 38. This engine housing 38 includes an inner casing structure 40 (e.g., a core case) and an outer casing structure 42. The inner casing structure 40 houses one or more or all of the engine sections 33-35; e.g., a core 44 of the gas turbine engine 22. The outer casing structure 42 includes a propulsor case 46 and a propulsor duct 48 connected to and disposed aft, downstream of the propulsor case 46. The outer casing structure 42 and its propulsor case 46 house the propulsor section 32. The outer casing structure 42 and its propulsor duct 48 axially overlap the inner casing structure 40 thereby forming an engine core bypass flowpath 50 radially between the inner casing structure 40 and the outer casing structure 42. This core bypass flowpath 50 extends from the propulsor section 32 to the exhaust system 24 radially outboard of the engine core 44. The core bypass flowpath 50 thereby bypasses the engine core 44. By contrast, a core flowpath 52 extends sequentially through the compressor section 33, the combustor section 34 and the turbine section 35 from the propulsor section 32 to the exhaust system 24. The core flowpath 52 thereby extends through the engine core 44.

The propulsor section 32, the compressor section 33 and the turbine section 35 each include a respective bladed rotor 54-56. Each of these rotors 54-56 may be rotatable about the axial centerline 28. Each of the rotors 54-56 includes a plurality of rotor blades arranged circumferentially around and connected to one or more respective rotor disks or hubs. The rotor blades, for example, may be formed integral with or mechanically fastened, welded, brazed, adhered and/or otherwise attached to the respective rotor disk(s) or hub(s).

The turbine rotor 56 is coupled to and is configured to drive rotation of the compressor rotor 55 and the propulsor rotor 54. The coupling between the turbine rotor 56 and the compressor rotor 55 may be a direct drive connection such that the turbine rotor 56 and the compressor rotor 55 rotate at a common (the same) speed. The turbine rotor 56, for example, may be connected to the compressor rotor 55 by an engine shaft 58. The compressor rotor 55, the turbine rotor 56 and the engine shaft 58 may collectively form or may otherwise be included in an engine rotating structure 60. A coupling between the rotating structure 60 and is turbine rotor 56 may be a direct drive connection such that the turbine rotor 56 and the propulsor rotor 54 (e.g., as well as the compressor rotor 55) rotate at a common (the same) speed. The turbine rotor 56, for example, may be connected to the propulsor rotor 54 by the engine shaft 58. With such an arrangement, the rotating structure 60 also includes the propulsor rotor 54. Alternatively, the coupling between the rotating structure 60 and its turbine rotor 56 and the propulsor rotor 54 may be a geared connection such that the turbine rotor 56 and the propulsor rotor 54 may rotate at different speeds. The propulsor rotor 54, for example, may be connected to the rotating structure 60 and its turbine rotor 56 through a gearbox 62; e.g., an epicyclic geartrain.

During operation, air enters the gas turbine engine 22 through the airflow inlet 30. This air is directed through the propulsor section 32 and into the core flowpath 52 and the core bypass flowpath 50. The air within the core flowpath 52 may be referred to as "core air". The air within the core bypass flowpath 50 may be referred to as "bypass air".

The core air is compressed by the compressor rotor 55 and directed into a combustion chamber 64 of a combustor in the combustor section 34. Fuel is injected into the combustion chamber 64 and mixed with the compressed core air to provide a fuel-air mixture. This fuel-air mixture is ignited and combustion products thereof flow through the turbine section 35 to the exhaust system 24. The flow of the combustion products through the turbine section 35 causes the turbine rotor 56 to rotate. The rotation of the turbine rotor 56 drives rotation of the compressor rotor 55 and, thus, compression of the air received from a core airflow inlet 66. The rotation of the turbine rotor 56 also drives rotation of the propulsor rotor 54. The rotation of the propulsor rotor 54 propels the bypass air through the core bypass flowpath 50 to the exhaust system 24.

The propulsion of the bypass air may account for a majority of thrust generated by the gas turbine engine 22, e.g., more than fifty percent (50%) of engine thrust. The gas turbine engine 22 of the present disclosure, however, is not limited to the foregoing exemplary thrust ratio. Furthermore, the gas turbine engine 22 of the present disclosure is not limited to the foregoing exemplary engine configuration. For example, the gas turbine engine 22 may include a separate turbine rotor (e.g., a power turbine rotor) for driving rotation of the propulsor rotor 54. The gas turbine engine 22 may also or alternatively include multiple rotating structures (e.g., spools) such that, for example, the compressor section 33 includes at least a low pressure compressor (LPC) rotor and a high pressure compressor (HPC) rotor and/or the turbine section 35 includes at least a high pressure turbine (HPT) rotor and a low pressure turbine (LPT) rotor. The gas turbine engine 22 may also or alternatively be configured without the propulsor section 32 in certain embodiments where the exhaust system 24 receives the combustion products without the bypass air. The gas turbine engine 22 may also or alternatively be configured to change (e.g., regulate) bypass air flow during gas turbine engine operation such that, for example, the exhaust system 24 receives the combustion products with different amounts of the bypass air. The gas turbine engine 22 of FIG. 1, for example, may include an optional flow regulator 67 that regulates the bypass air flow out of the core bypass flowpath 50 to the exhaust system 24. The present disclosure therefore is not limited to any particular gas turbine engine types or configurations.

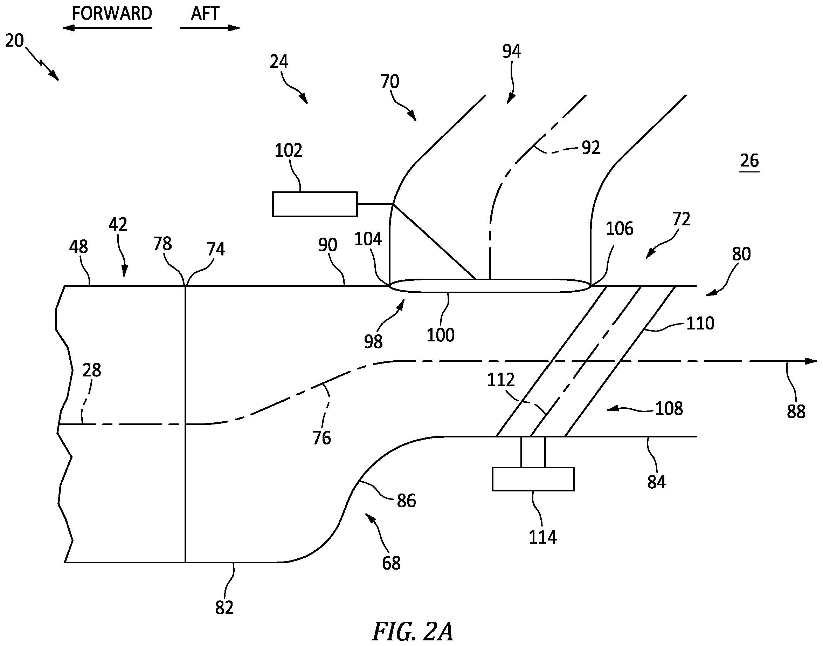

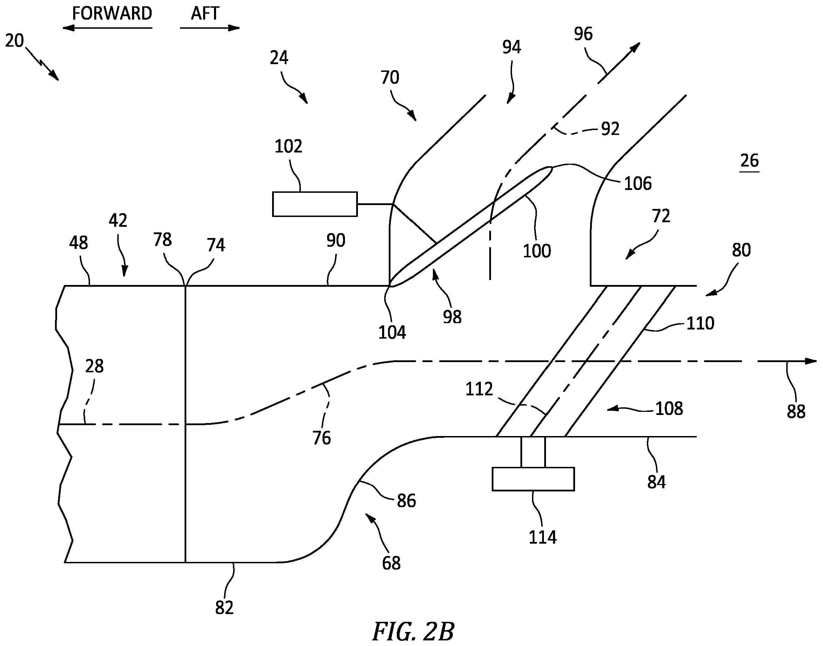

The exhaust system 24 of FIG. 1 is configured to selectively direct the fluid flow (e.g., the combustion products and/or the bypass air) received from the gas turbine engine 22 into the exterior environment 26. The exhaust system 24 of FIGS. 2A and 2B, for example, includes an (e.g., tubular) engine exhaust duct 68 and a (e.g., tubular) nozzle bypass duct 70; e.g., a thrust bypass duct. The exhaust system 24 of FIGS. 2A and 2B also includes a fluid flow regulation system 72.

The exhaust duct 68 is connected to (or may be an aft, downstream part of) the engine housing 38. The exhaust duct 68 of FIGS. 2A and 2B, for example, is connected to the outer casing structure 42 and its propulsor duct 48 at (e.g., on, adjacent or proximate) an aft, downstream end 74 of the outer casing structure 42 and its propulsor duct 48. The exhaust duct 68 extends longitudinally along a longitudinal centerline 76 of the exhaust duct 68 (e.g., generally axially along the axial centerline 28) from a forward, upstream end 78 of the exhaust system 24 and its exhaust duct 68 (e.g., at the outer casing structure downstream end 74) to an aft, downstream exhaust nozzle 80.

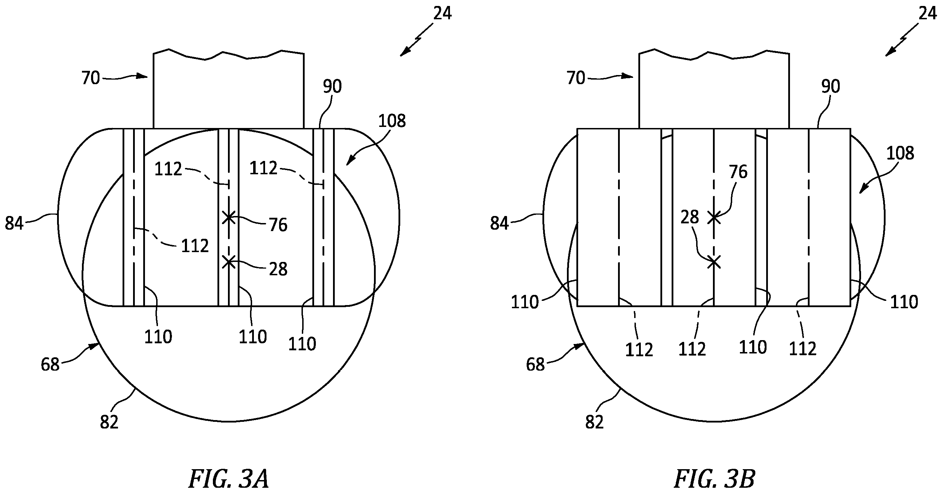

The exhaust duct 68 has a tubular geometry and forms a solid (e.g., non-annular) internal exhaust duct flowpath through the exhaust system 24. The exhaust duct 68 of FIGS. 2A and 2B includes a forward, upstream section 82, an aft, downstream section 84 and an intermediate (e.g., transition) section 86. The exhaust duct upstream section 82 is disposed at the exhaust duct upstream end 78. Referring to FIGS. 3A and 3B, this exhaust duct upstream section 82 may have a cross-sectional geometry with a circular shape when viewed, for example, in a reference plane perpendicular to the longitudinal centerline 76 and/or the axial centerline 28. The exhaust duct downstream section 84 of FIGS. 2A and 2B is disposed at an aft, downstream end of the exhaust duct 68, and/or may form the exhaust nozzle 80. Referring to FIGS. 3A and 3B, this exhaust duct downstream section 84 may have a cross-sectional geometry with an elongated shape (e.g., an oval shape, an elliptical shape, a racetrack shape, a rectangular shape, etc.) when viewed, for example, in a reference plane perpendicular to the longitudinal centerline 76 and/or the axial centerline 28. The exhaust duct intermediate section 86 of FIGS. 2A and 2B extends longitudinally along the longitudinal centerline 76 between and to the exhaust duct upstream section 82 and the exhaust duct downstream section 84. This exhaust duct intermediate section 86 may have a cross-sectional geometry that (e.g., continuously or stepwise) transitions from the cross-sectional geometry of the exhaust duct upstream section 82 to the cross-sectional geometry of the exhaust duct downstream section 84. The present disclosure, however, is not limited to such an exemplary exhaust duct configuration. For example, the cross-sectional geometry of the exhaust duct upstream section 82 may alternatively have a non-circular shape and/or the cross-sectional geometry of the exhaust duct downstream section 84 may alternatively have a circular or otherwise non-elongated shape. In another example, the exhaust duct 68 may have a constant cross-sectional geometry (e.g., size and shape) along its longitudinal length.

The exhaust nozzle 80 of FIG. 2A is configured to direct the fluid flow out of the exhaust system 24 and its exhaust duct 68 along an exhaust trajectory 88. This exhaust trajectory 88 of FIG. 2A may be substantially in an aft direction. The exhaust trajectory 88, for example, may be substantially (e.g., within +/- five degrees) or completely parallel with the axial centerline 28 and/or a horizon line in an aft direction; e.g., relative to normal forward flight of the aircraft. The present disclosure, however, is not limited to such an exemplary exhaust trajectory. Furthermore, while the exhaust nozzle 80 is described as a fixed trajectory exhaust nozzle, the exhaust nozzle 80 may alternatively be configured as a thrust vectoring exhaust nozzle in other embodiments. The exhaust nozzle 80 may also or alternatively be configured as a fixed area exhaust nozzle or a variable area exhaust nozzle.

The nozzle bypass duct 70 is connected to the exhaust duct 68. The nozzle bypass duct 70 of FIGS. 2A and 2B, for example, is connected to a side 90 of the exhaust duct downstream section 84 and/or the exhaust duct intermediate section 86. This nozzle bypass duct 70 projects longitudinally along a longitudinal centerline 92 of the nozzle bypass duct 70 outward from the exhaust duct 68 and its section(s) 84 and/or 86 to a bypass duct outlet 94; e.g., a nozzle or a diffuser. At least a portion or an entirety of the nozzle bypass duct longitudinal centerline 92 may be angularly offset from the exhaust duct longitudinal centerline 76 by an angle. This angle may remain constant or may vary as shown, for example, in FIGS. 2A and 2B. The angle may be greater than zero degrees (0°) and equal to or less than ninety degrees (90°). For example, at a connection between the nozzle bypass duct 70 and the exhaust duct 68, the angle may be between eighty and ninety degrees. At the bypass duct outlet 94, the angle may be between thirty-five and fifty-five degrees. The present disclosure, however, is not limited to such an exemplary configuration.

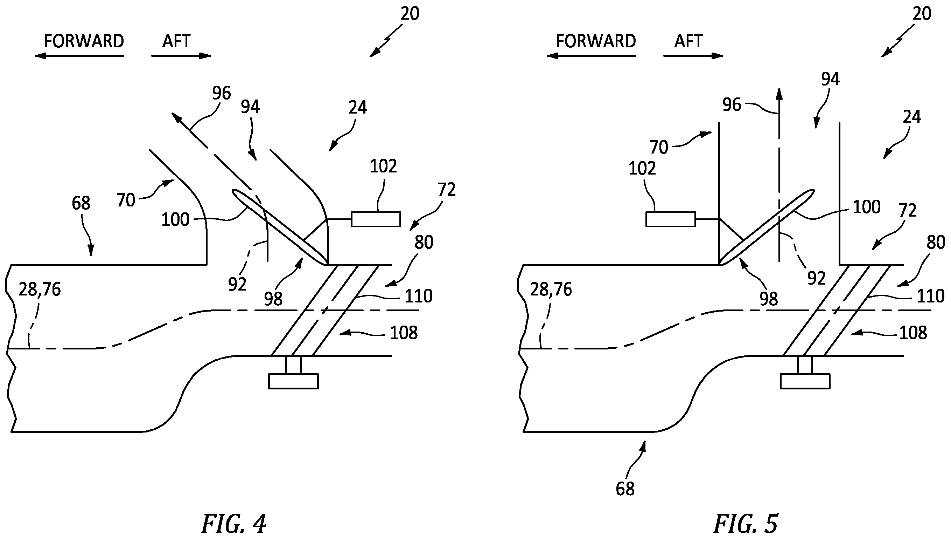

The bypass duct outlet 94 of FIG. 2B is configured to direct the fluid flow out of the exhaust system 24 and its nozzle bypass duct 70 along a bypass trajectory 96. This bypass trajectory 96 of FIG. 2B may be in an aft and outward direction. The bypass trajectory 96, for example, may be angularly offset from the axial centerline 28, the horizon line and/or the exhaust trajectory 88 by an acute angle. However, the bypass trajectory 96 may include an aft directional component; e.g., relative to normal forward flight of the aircraft. This aft directional component, for example, may be in a direction parallel to the centerline 28 and/or 76 and away from the gas turbine engine 22 along the centerline 28 and/or 76. Note, the exhaust nozzle 80 may direct flow in the aft direction. Alternatively, referring to FIG. 4, the bypass trajectory 96 may alternatively include a forward directional component. This forward directional component, for example, may be in a direction parallel to the centerline 28 and/or 76 and towards the gas turbine engine 22 along the centerline 28 and/or 76. Still alternatively, referring to FIG. 5, the bypass trajectory 96 may include neither an aft nor a forward directional component, but rather extend substantially or completely outward.

Referring to FIGS. 2A and 2B, the fluid flow regulation system 72 includes a bypass flow regulator 98; e.g., a valve mechanism, a flow modulating mechanism, etc. This bypass flow regulator 98 is configured to regulate (e.g., control) fluid flow from the exhaust duct 68 into the nozzle bypass duct 70. The bypass flow regulator 98, for example, may selectively fluidly decouple (e.g., see FIG. 2A) or fluidly couple (e.g., see FIG. 2B) the exhaust duct 68 and the nozzle bypass duct 70. With this arrangement, the bypass flow regulator 98 of FIG. 2A may close (or reduce flow into the nozzle bypass duct 70) during normal aircraft flight such that the fluid flow received from the gas turbine engine 22 (see FIG. 1) is substantially or only directed through the exhaust nozzle 80 to provide forward thrust. However, during aircraft landing, aircraft takeoff and/or one or more other aircraft maneuvers, the bypass flow regulator 98 of FIG. 2B may open such that at least some (e.g., less than 50%, 50% or more than 50%) of the fluid flow received from the gas turbine engine 22 (see FIG. 1) is also directed through the bypass duct outlet 94. This may serve to reduce engine thrust provided by the exhaust system 24 and/or redirect (e.g., vector) the airflow and/or thrust produced by the gas turbine engine 22.

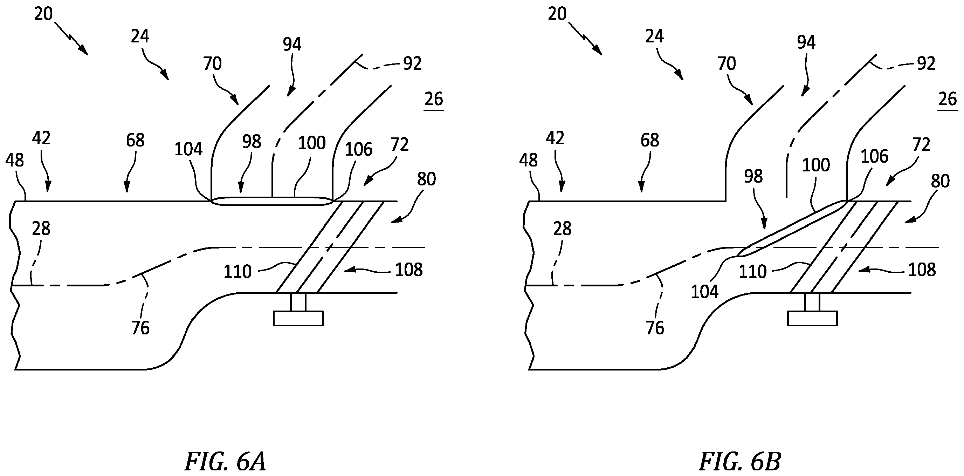

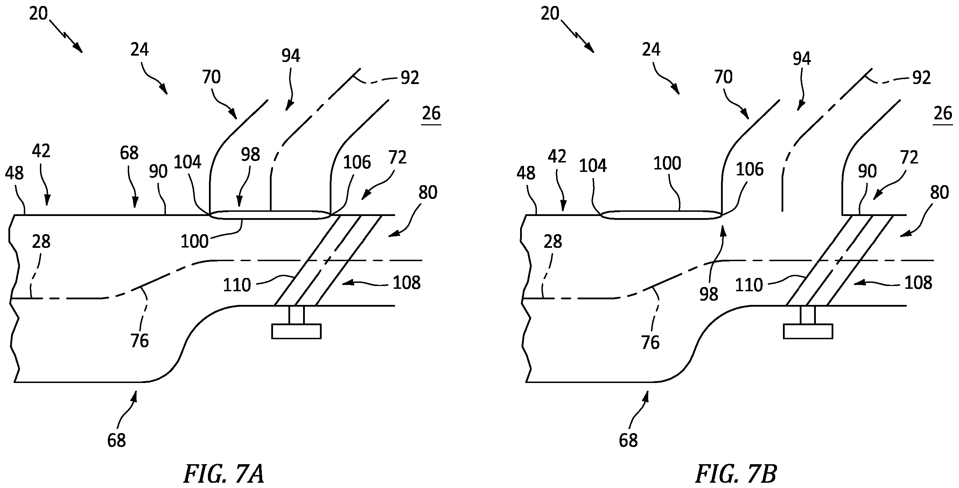

The bypass flow regulator 98 of FIGS. 2A and 2B includes a regulator door 100 and an actuator 102 for moving the regulator door 100. The regulator door 100 is configured to move (e.g., pivot) between a closed position (e.g., see FIG. 2A) and an open position (e.g., see FIG. 2B). Of course, the regulator door 100 may also move to one or more intermediate positions between the closed position of FIG. 2A and the open position of FIG. 2B. In the embodiments of FIGS. 2A and 2B, the regulator door 100 pivots into the nozzle bypass duct 70 from the closed position of FIG. 2A to the open position of FIG. 2B. Here, a forward, upstream end 104 of the regulator door 100 may be pivotally coupled to a stationary support structure; e.g., the exhaust duct 68 and/or the nozzle bypass duct 70. In other embodiments however, referring to FIGS. 6A and 6B, the regulator door 100 may pivot into the exhaust duct 68 from the closed position of FIG. 6A to the open position of FIG. 6B. Here, an aft, downstream end 106 of the regulator door 100 may be pivotally coupled to the stationary support structure. In still other embodiments, referring to FIGS. 7A and 7B, the regulator door 100 translates (e.g., slides) along the side 90 of the exhaust duct 68 between the closed position of FIG. 7A and the open position of FIG. 7B.

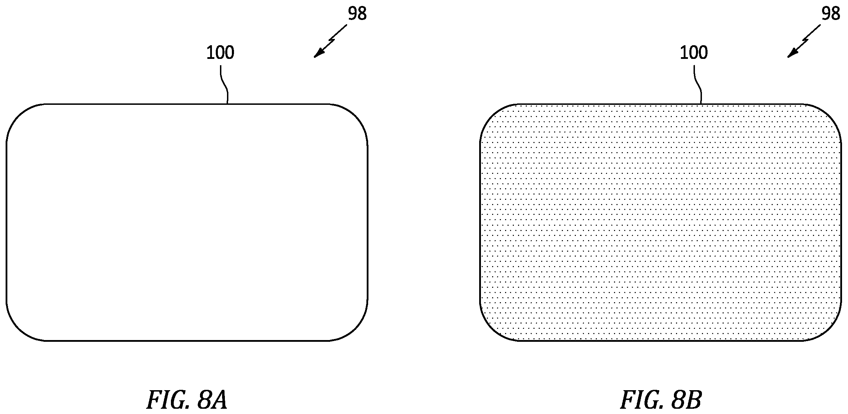

In some embodiments, referring to FIG. 8A, the regulator door 100 may be formed from or otherwise include a solid, non-perforated panel. In other embodiments, referring to FIG. 8B, the regulator door 100 may be formed from or otherwise include a perforated panel; e.g., a panel with one or more perforations such as, but not limited to, through-holes.

Referring to FIGS. 2A and 2B, the fluid flow regulation system 72 also includes an exhaust flow regulator 108 (e.g., a valve mechanism, a flow modulating mechanism, etc.) to provide additional exhaust system fluid flow control. This exhaust flow regulator 108 is arranged within the exhaust duct 68 downstream of the bypass flow regulator 98 / an opening to the nozzle bypass duct 70. The exhaust flow regulator 108 of FIGS. 2A and 2B, for example, is disposed within the exhaust duct downstream section 84 and upstream of the exhaust nozzle 80. The exhaust flow regulator 108 is configured to regulate (e.g., control) fluid flow through the exhaust duct 68 to the exhaust nozzle 80. The exhaust flow regulator 108 may also regulate (e.g., control) fluid flow from the exhaust duct 68 to the nozzle bypass duct 70. The exhaust flow regulator 108, for example, may move between an open position (e.g., see FIG. 3A) and a closed position (e.g., see FIG. 3B). When the exhaust flow regulator 108 is in the open position of FIG. 3A, a backpressure at the exhaust flow regulator 108 is relatively small and the fluid flow through the exhaust flow regulator 108 to the exhaust nozzle 80 may be relatively large. However, when the exhaust flow regulator 108 is in the closed position of FIG. 3B, the backpressure at the exhaust flow regulator 108 is relatively large and the fluid flow through the exhaust flow regulator 108 to the exhaust nozzle 80 may be relatively small. Thus, referring to FIG. 2B, by increasing the backpressure downstream of the bypass flow regulator 98 / reducing fluid flow through the exhaust flow regulator 108 to the exhaust nozzle 80, the exhaust flow regulator 108 may functionally increase fluid flow into the nozzle bypass duct 70 when the fluid flow regulation system 72 is open. It is contemplated that the exhaust flow regulator 108 may be actuated (e.g., opened and closed) when the bypass flow regulator 98 is closed (e.g., see FIG. 2A) and/or opened (e.g., see FIG. 2B).

The exhaust flow regulator 108 of FIGS. 3A and 3B may be configured as a set of (e.g., moveable, adjustable, etc.) louvers. The exhaust flow regulator 108 of FIGS. 3A and 3B, for example, includes one or more moveable (e.g., pivotable) regulator vanes 110; e.g., louvers, exhaust exit guide vanes, etc. These regulator vanes 110 are arranged side-by-side in an array. Each of the regulator vanes 110 extends laterally across the exhaust duct downstream section 84 between and to opposing sides of the exhaust duct 68. Each of the regulator vanes 110 may be configured to move (e.g., pivot) about a respective vane axis 112. These regulator vanes 110 may be simultaneously, staged or otherwise moved (e.g., pivoted) by at least one actuator 114 (see FIGS. 2A and 2B) between the open position of FIG. 3A and the closed position of FIG. 3B.

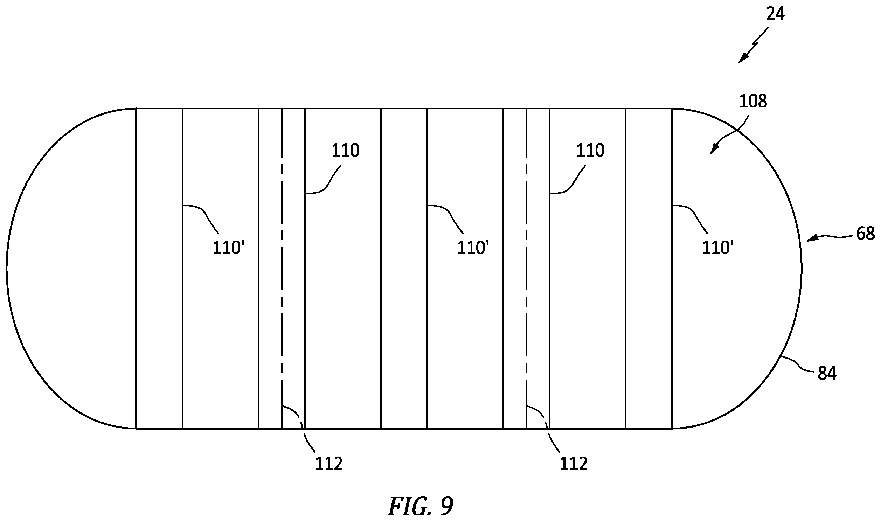

In some embodiments, each of the regulator vanes 110 may move between the open position of FIG. 3A and the closed position of FIG. 3B as described above. In other embodiments, referring to FIG. 9, the exhaust flow regulator 108 may also include one or more stationary regulator vanes 110'. These stationary vanes 110' may be non-structural or may also be configured as struts for structurally supporting the exhaust duct 68.

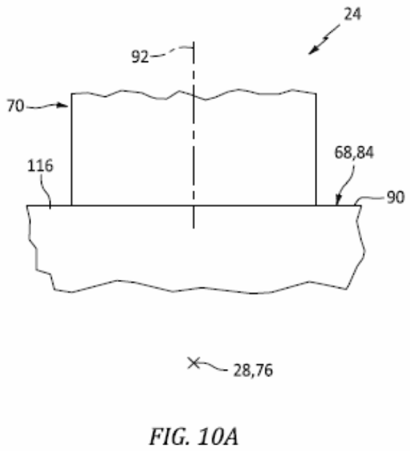

According to the invention, referring to FIG. 10A, the nozzle bypass duct 70 projects out from a portion 116 of the exhaust duct 68 with a flat geometry when viewed in a reference plane perpendicular to the longitudinal centerline 76 and/or the axial centerline 28. Such a flat geometry may facilitate sealing with the regulator door 100 when closed.

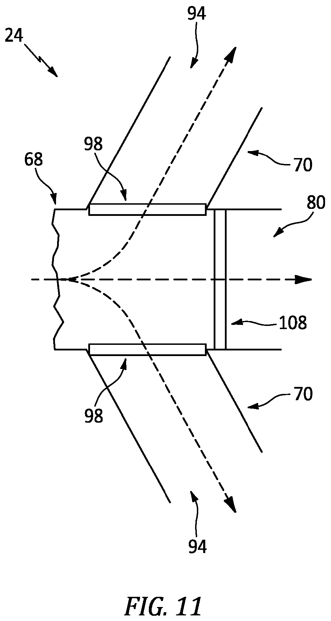

In some embodiments, the exhaust system 24 may (e.g., only) include the single exhaust duct 68 and the single nozzle bypass duct 70. However in other embodiments, referring to FIG. 11, the exhaust system 24 may include multiple of the nozzle bypass ducts 70, for example, similarly arranged and configured. In the embodiment of FIG. 11, the nozzle bypass ducts 70 are arranged on opposing sides of the exhaust duct 68; however, the present disclosure is not limited to such an exemplary arrangement.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims.

## Claims

1. A system (20) for an aircraft, comprising:
an exhaust duct (68) extending longitudinally to an exhaust nozzle (80);
an exhaust flow regulator (108) configured to regulate fluid flow through the exhaust duct (68) to the exhaust nozzle (80);
a nozzle bypass duct (70) projecting out from a side (90) of the exhaust duct (68); and
a bypass flow regulator (98) configured to regulate fluid flow from the exhaust duct (68) into the nozzle bypass duct (70), the bypass flow regulator (98) disposed upstream of the exhaust flow regulator (108),
the nozzle bypass duct (70) projects out from a portion (116) of the exhaust duct (68) at the side (90) of the exhaust duct (68) into an exterior environment (26); **characterised in that**
the portion (116) of the exhaust duct (68) has a flat geometry in a reference plane perpendicular to a longitudinal centerline (76) of the exhaust duct (68).

2. The system of claim 1, further comprising:
a compressor section (33);
a combustor section (34);
a turbine section (35); and
a core flowpath (52) extending sequentially through the compressor section (33), the combustor section (34) and the turbine section (35) to the exhaust duct (68).

3. The system of claim 1, further comprising:
a propulsor section (32);
an engine core (44); and
a core bypass flowpath (50) extending from the propulsor section (32), along and outside of the engine core (44), to the exhaust duct (68); and, optionally,
a core flowpath (52) extending through the engine core (44) to the exhaust duct (68).

4. The system of claim 3, further comprising a flowpath flow regulator configured to regulate bypass air flow out of the core bypass flowpath (50) to the exhaust duct (68).

5. The system of any preceding claim, wherein:
the exhaust nozzle (80) is configured to direct fluid out of the exhaust duct (68) along an exhaust trajectory (88); and
the nozzle bypass duct (70) projects out from the exhaust duct (68) to a bypass duct outlet (94), and the bypass duct outlet (94) is configured to direct fluid out of the nozzle bypass duct (70) along a bypass trajectory (96) that is different than the exhaust trajectory (88).

6. The system of claim 5, wherein the exhaust trajectory (88) and the bypass trajectory (96) each comprise an aft directional component; or wherein the exhaust trajectory (88) comprises an aft directional component and the bypass trajectory (96) comprises a forward directional component.

7. The system of any of claims 1 to 4, wherein:
the nozzle bypass duct (70) projects out from the exhaust duct (68) to a bypass duct outlet (94); and
the bypass duct outlet (94) and the exhaust nozzle (80) are fluidly coupled in parallel with a section of the exhaust duct (68) upstream of the bypass flow regulator (98) when the bypass flow regulator (98) is at least partially open.

8. The system of any preceding claim, wherein the exhaust flow regulator (108) comprises one or more movable louvers (110).

9. The system of any of claims 1 to 7, wherein the exhaust flow regulator (108) comprises a pivotable vane (110) projecting across the exhaust duct (68) downstream of the bypass flow regulator (98).

10. The system of any preceding claim, wherein the bypass flow regulator (98) comprises a door (100) configured to pivot into the nozzle bypass duct (70).

11. The system of any of claims 1 to 9, wherein the bypass flow regulator (98) comprises a door (100) configured to pivot into the exhaust duct (68).

12. The system of any of claims 1 to 9, wherein the bypass flow regulator (98) comprises a door (100) configured to translate along the exhaust duct (68).

13. The system of any preceding claim, wherein
the exhaust duct (68) comprises an upstream section (82) and a downstream section (84);
the upstream section (82) is upstream of the bypass flow regulator (98) and has a first cross-sectional geometry; and
the downstream section (84) is at the bypass flow regulator (98) and has a second cross-sectional geometry that is different than the first cross-sectional geometry, wherein, optionally:
the first cross-sectional geometry has a circular shape; and
the second cross-sectional geometry has an elongated shape.

## Patentansprüche

1. Anlage (20) für ein Flugzeug, umfassend:
einen Abgaskanal (68), der sich in Längsrichtung zu einer Abgasdüse (80) erstreckt;
einen Abgasstromregler (108), der dazu konfiguriert ist, einen Fluidstrom durch den Abgaskanal (68) zur Abgasdüse (80) zu regeln;
einen Düsenbypasskanal (70), der aus einer Seite (90) des Abgaskanals (68) herausragt; und
einen Bypassstromregler (98), der dazu konfiguriert ist, den Fluidstrom aus dem Abgaskanal (68) in den Düsenbypasskanal (70) zu regeln, wobei der Bypassstromregler (98) stromaufwärts des Abgasstromreglers (108) angeordnet ist,
wobei der Düsenbypasskanal (70) aus einem Abschnitt (116) des Abgaskanals (68) an der Seite (90) des Abgaskanals (68) in eine Außenumgebung (26) ragt; **dadurch gekennzeichnet, dass**
der Abschnitt (116) des Abgaskanals (68) in einer Bezugsebene senkrecht zu einer Längsmittelachse (76) des Abgaskanals (68) eine flache Geometrie aufweist.

2. Anlage nach Anspruch 1, ferner umfassend:
einen Verdichterteilabschnitt (33);
einen Brennkammerteilabschnitt (34);
einen Turbinenteilabschnitt (35); und
einen Kernstromweg (52), der sich nacheinander durch den Verdichterteilabschnitt (33), den Brennkammerteilabschnitt (34) und den Turbinenteilabschnitt (35) zum Abgaskanal (68) erstreckt.

3. Anlage nach Anspruch 1, ferner umfassend:
einen Antriebsteilabschnitt (32);
einen Motorkern (44); und
einen Kernbypassstromweg (50), der sich vom Antriebsteilabschnitt (32) entlang und außerhalb des Motorkerns (44) zum Abgaskanal (68) erstreckt; und optional
einen Kernstromweg (52), der sich durch den Motorkern (44) zum Abgaskanal (68) erstreckt.

4. Anlage nach Anspruch 3, ferner umfassend einen Stromweg-Stromregler, der dazu konfiguriert ist, den Bypassluftstrom aus dem Kernbypassstromweg (50) zum Abgaskanal (68) zu regeln.

5. Anlage nach einem der vorhergehenden Ansprüche, wobei:
die Abgasdüse (80) dazu konfiguriert ist, Fluid aus dem Abgaskanal (68) entlang einer Abgasbahn (88) auszuleiten; und
der Düsenbypasskanal (70) aus dem Abgaskanal (68) heraus in einen Bypasskanalauslass (94) ragt, und der Bypasskanalauslass (94) dazu konfiguriert ist, Fluid aus dem Düsenbypasskanal (70) entlang einer Bypassbahn (96) zu leiten, die sich von der Abgasbahn (88) unterscheidet.

6. Anlage nach Anspruch 5, wobei die Abgasbahn (88) und die Bypassbahn (96) jeweils eine nach hinten gerichtete Komponente umfassen; oder wobei die Abgasbahn (88) eine nach hinten gerichtete Komponente umfasst und die Bypassbahn (96) eine nach vorne gerichtete Komponente umfasst.

7. Anlage nach einem der Ansprüche 1 bis 4, wobei:
der Düsenbypasskanal (70) aus dem Abgaskanal (68) heraus in einen Bypasskanalauslass (94) ragt; und
der Bypasskanalauslass (94) und die Abgasdüse (80) parallel zu einem Teilabschnitt des Abgaskanals (68) stromaufwärts des Bypassstromreglers (98) fluidgekoppelt sind, wenn der Bypassstromregler (98) mindestens teilweise geöffnet ist.

8. Anlage nach einem der vorhergehenden Ansprüche, wobei der Abgasstromregler (108) eine oder mehrere bewegliche Lamellen (110) umfasst.

9. Anlage nach einem der Ansprüche 1 bis 7, wobei der Abgasstromregler (108) eine schwenkbare Leitschaufel (110) umfasst, die stromabwärts des Bypassstromreglers (98) quer über den Abgaskanal (68) ragt.

10. Anlage nach einem der vorhergehenden Ansprüche, wobei der Bypassstromregler (98) eine Klappe (100) umfasst, die dazu konfiguriert ist, in den Düsenbypasskanal (70) zu schwenken.

11. Anlage nach einem der Ansprüche 1 bis 9, wobei der Bypassstromregler (98) eine Klappe (100) umfasst, die dazu konfiguriert ist, in den Abgaskanal (68) zu schwenken.

12. Anlage nach einem der Ansprüche 1 bis 9, wobei der Bypassstromregler (98) eine Klappe (100) umfasst, die dazu konfiguriert ist, sich entlang des Abgaskanals (68) zu verschieben.

13. Anlage nach einem der vorhergehenden Ansprüche, wobei
der Abgaskanal (68) einen stromaufwärtigen Teilabschnitt (82) und einen stromabwärtigen Teilabschnitt (84) umfasst;
wobei sich der stromaufwärtige Teilabschnitt (82) stromaufwärts des Bypassstromreglers (98) befindet und eine erste Querschnittsgeometrie aufweist; und
sich der stromabwärtige Teilabschnitt (84) am Bypassstromregler (98) befindet und eine zweite Querschnittsgeometrie aufweist, die sich von der ersten Querschnittsgeometrie unterscheidet, wobei optional:
die erste Querschnittsgeometrie eine runde Form aufweist; und
die zweite Querschnittsgeometrie eine längliche Form aufweist.

## Revendications

1. Système (20) pour aéronef, comprenant :
un conduit d'échappement (68) s'étendant longitudinalement jusqu'à une buse d'échappement (80) ;
un régulateur de débit d'échappement (108) configuré pour réguler le débit de fluide à travers le conduit d'échappement (68) jusqu'à la buse d'échappement (80) ;
un conduit de dérivation de buse (70) faisant saillie d'un côté (90) du conduit d'échappement (68) ; et
un régulateur de débit de dérivation (98) configuré pour réguler le débit de fluide du conduit d'échappement (68) dans le conduit de dérivation de buse (70), le régulateur de débit de dérivation (98) étant disposé en amont du régulateur de débit d'échappement (108),
le conduit de dérivation de buse (70) fait saillie d'une portion (116) du conduit d'échappement (68) sur le côté (90) du conduit d'échappement (68) dans un environnement extérieur (26) ; **caractérisé en ce que**
la portion (116) du conduit d'échappement (68) présente une géométrie plate dans un plan de référence perpendiculaire à une ligne centrale longitudinale (76) du conduit d'échappement (68).

2. Système selon la revendication 1, comprenant en outre :
une section de compresseur (33) ;
une section de chambre de combustion (34) ;
une section de turbine (35) ; et
une voie d'écoulement centrale (52) s'étendant successivement à travers la section de compresseur (33), la section de chambre de combustion (34) et la section de turbine (35) vers le conduit d'échappement (68).

3. Système selon la revendication 1, comprenant en outre :
une section de propulseur (32) ;
un noyau de moteur (44) ; et
une voie d'écoulement de dérivation centrale (50) s'étendant de la section de propulseur (32), le long et à l'extérieur du noyau de moteur (44), vers le conduit d'échappement (68) ; et,
en option,
une voie d'écoulement centrale (52) s'étendant à travers le noyau du moteur (44) vers le conduit d'échappement (68).

4. Système selon la revendication 3, comprenant en outre un régulateur de débit de voie d'écoulement configuré pour réguler le débit d'air de dérivation sortant de la voie d'écoulement de dérivation centrale (50) vers le conduit d'échappement (68).

5. Système selon l'une quelconque des revendications précédentes, dans lequel :
la buse d'échappement (80) est configurée pour diriger le fluide hors du conduit d'échappement (68) le long d'une trajectoire d'échappement (88) ; et
le conduit de dérivation de buse (70) fait saillie hors du conduit d'échappement (68) vers une sortie de conduit de dérivation (94), et la sortie de conduit de dérivation (94) est configurée pour diriger du fluide hors du conduit de dérivation de buse (70) le long d'une trajectoire de dérivation (96) différente de la trajectoire d'échappement (88).

6. Système selon la revendication 5, dans lequel la trajectoire d'échappement (88) et la trajectoire de dérivation (96) comprennent chacune une composante directionnelle vers l'arrière ; ou dans lequel la trajectoire d'échappement (88) comprend une composante directionnelle vers l'arrière et la trajectoire de dérivation (96) comprend une composante directionnelle vers l'avant.

7. Système selon l'une quelconque des revendications 1 à 4, dans lequel :
le conduit de dérivation de buse (70) fait saillie hors du conduit d'échappement (68) vers une sortie de conduit de dérivation (94) ; et
la sortie de conduit de dérivation (94) et la buse d'échappement (80) sont couplées fluidiquement en parallèle avec une section du conduit d'échappement (68) en amont du régulateur de débit de dérivation (98) lorsque le régulateur de débit de dérivation (98) est au moins partiellement ouvert.

8. Système selon l'une quelconque des revendications précédentes, dans lequel le régulateur de débit d'échappement (108) comprend un ou plusieurs volets mobiles (110).

9. Système selon l'une quelconque des revendications 1 à 7, dans lequel le régulateur de débit d'échappement (108) comprend une ailette pivotante (110) faisant saillie à travers le conduit d'échappement (68) en aval du régulateur de débit de dérivation (98).

10. Système selon l'une quelconque des revendications précédentes, dans lequel le régulateur de débit de dérivation (98) comprend une porte (100) configurée pour pivoter dans le conduit de dérivation de buse (70).

11. Système selon l'une quelconque des revendications 1 à 9, dans lequel le régulateur de débit de dérivation (98) comprend une porte (100) configurée pour pivoter dans le conduit d'échappement (68).

12. Système selon l'une quelconque des revendications 1 à 9, dans lequel le régulateur de débit de dérivation (98) comprend une porte (100) configurée pour se translater le long du conduit d'échappement (68).

13. Système selon l'une quelconque des revendications précédentes, dans lequel
le conduit d'échappement (68) comprend une section amont (82) et une section aval (84) ;
la section amont (82) est située en amont du régulateur de débit de dérivation (98) et présente une première géométrie de section transversale ; et
la section aval (84) est située au niveau du régulateur de débit de dérivation (98) et présente une seconde géométrie de section transversale différente de la première géométrie de section transversale, dans lequel, éventuellement :
la première géométrie de section transversale présente une forme circulaire ; et
la seconde géométrie de section transversale présente une forme allongée.
